# DEMANDE DE BREVET EUROPEEN

(11) **EP 1 266 933 A1**
(43) Date de publication de la demande: **18.12.2002**
(21) Numéro de dépôt: 01202288.5
(22) Date de dépôt: 14.06.2001
(51) Int. Cl.: C08L 23/06

(54) **Composition de polymères d'éthylène**

(71) Demandeur: SOLVAY POLYOLEFINS EUROPE - BELGIUM (Société Anonyme), 1050 Bruxelles (BE)
(72) Inventeur: Mattioli, Virginie, 1030 Bruxelles (BE); Siberdt, Fabian, 1090 Bruxelles (BE); Frederich, André, 1120 Bruxelles (BE)
(74) Mandataire: Smith, Julian Philip Howard

(57) **Abrégé**

Composition de polymères d'éthylène présentant de bonnes propriétés mécaniques comprenant de 53 à 63 % en poids par rapport au poids total de la composition d'une fraction polymère de l'éthylène et de 37 à 47 % en poids par rapport au poids total de la composition d'une fraction copolymère de l'éthylène et d'au moins une alpha-oléfine contenant de 4 à 10 atomes de carbone.

## Description

La présente invention concerne une composition de polymères d'éthylène comprenant un polymère d'éthylène et un copolymère de l'éthylène, ainsi que son utilisation pour la fabrication de tubes. Elle concerne également un procédé de fabrication de cette composition.

Dans la demande de brevet EP-A-0 603 935 (SOLVAY), on décrit une composition de polymères d'éthylène comprenant un polymère d'éthylène d'indice de fluidité élevé (MI₂ de 5 à 1000 g/10 min) et un polymère d'éthylène d'indice de fluidité faible (MI₅ de 0,01 à 2 g/10 min) préparée dans au moins deux réacteurs disposés en série, le rapport pondéral de ces polymères étant égal à (30 à 70):(70 à 30). Cette demande de brevet divulgue plus spécifiquement une composition comprenant un homopolymère de l'éthylène ayant un MI₂ de 168 g/10 min et un copolymère de l'éthylène et du butène ayant un MI₅ de 0,21 g/10 min.

Dans la demande de brevet EP-A-0 897 934, on décrit une composition comprenant un polymère d'éthylène d'indice de fluidité élevé (MI₂ de 5 à 1000 g/10 min) et un polymère d'éthylène et d'hexène d'indice de fluidité faible (MI₅ de 0,01 à 2 g/10 min), le rapport pondéral de ces polymères étant égal à (30 à 70):(70 à 30).

Les compositions décrites dans ces demandes de brevet présentent en général des propriétés de mise en oeuvre et des propriétés mécaniques qui les rendent aptes à être utilisées pour la fabrication d'objets façonnés divers, en particulier pour la fabrication de tuyaux pour le transport de fluides sous pression. Les compositions explicitement décrites dans ces demandes de brevet présentent des propriétés mécaniques, et plus spécifiquement une résistance au fluage, qui permettent de leur attribuer une classification selon les normes ISO 9080 et ISO 12162 de MRS 8 ou 10. Quand ces compositions sont utilisées pour la fabrication de tuyaux de dimensions adéquates, ces tuyaux résistent à certaines pressions et à certaines températures de sorte que l'extrapolation montre que les tuyaux ont une résistance, à 20 °C, à des contraintes circonférentielles, respectivement, d'au moins 8 et 10 MPa pendant au moins 50 ans. Il existe toujours une demande pour des compositions ayant une meilleure résistance au fluage de façon à pouvoir fabriquer des tuyaux résistant à une contrainte circonférentielle encore plus élevée, tout en conservant ou en améliorant les autres propriétés mécaniques et de mise en oeuvre, telles que notamment la résistance à la propagation lente de fissures (ESCR) et la résistance à la propagation rapide de fissures (RCP).

La présente invention a pour but de procurer des compositions de polymères d'éthylène présentant un meilleur compromis entre les propriétés de mise en oeuvre et les propriétés mécaniques par rapport aux compositions obtenues par les procédés connus de l'état de la technique.

L'invention concerne dès lors une composition de polymères d'éthylène ayant une masse volumique standard d'au moins 950 kg/m³, un indice de fluidité MI₅ de 0,05 à 2 g/10 min et une teneur en alpha-oléfine contenant de 4 à 10 atomes de carbone de 0,15 à 1 mole % et comprenant :
- de 53 à 63 % en poids par rapport au poids total de la composition d'une fraction polymère de l'éthylène (A) ayant un indice de fluidité MI₂ d'au moins 100 g/10 min, une masse volumique standard d'au moins 969 kg/m³ et une distribution de poids moléculaire M_{w}/Mₙ supérieure à 4, et
- de 37 à 47 % en poids par rapport au poids total de la composition d'une fraction copolymère de l'éthylène et d'au moins une alpha-oléfine contenant de 4 à 10 atomes de carbone (B) ayant une teneur en alpha-oléfine de 0,32 à 2,7 mole %, un indice de fluidité MI₅ de 0,001 à 0,5 g/10 min, une masse volumique standard d'au plus 930 kg/m³ et une distribution de poids moléculaire M_{w}/Mₙ supérieure à 4.

Aux fins de la présente invention, on entend désigner par polymère de l'éthylène (A), un polymère d'éthylène comprenant des unités monomériques dérivées d'éthylène et éventuellement des unités monomériques dérivées d'autres oléfines. On entend désigner par copolymère de l'éthylène et d'au moins une alpha-oléfine (B), un copolymère comprenant des unités monomériques dérivées de l'éthylène et des unités monomériques dérivées d'au moins une alpha-oléfine sélectionnée parmi les monomères oléfiniquement insaturés comprenant de 4 à 10 atomes de carbone tels que par exemple le 1-butène, le 1-hexène, le 1-pentène, le 3-méthyl-1-butène, les 3- et 4-méthyl-1-pentènes et le 1-octène. Des alpha-oléfines préférées sont le 1-butène, le 1-hexène, le 1-octène et leurs mélanges. Particulièrement préférés sont le 1-butène et le 1-hexène.

Aux fins de la présente invention, la teneur en alpha-oléfine est mesurée par RMN¹³C selon la méthode décrite dans J.C.RANDALL, JMS-REV.MACROMOL.CHEM. PHYS., C29(2&3), p.201-317 (1989). Par exemple la teneur en unités dérivées de l'hexène est calculée à partir des mesures des intégrales des raies caractéristiques de l'hexène (23,4; 34,9 et 38,1 ppm) par rapport à l'intégrale de la raie caractéristique des unités dérivées de l'éthylène (30 ppm).

La teneur en unités monomériques dérivées de ou des alpha-oléfines dans le copolymère (B), appelée ci-après teneur en alpha-oléfine, est généralement d'au moins 0,5 mole %, en particulier d'au moins 0,8 mole %, les valeurs d'au moins 1 mole % étant favorables. La teneur en alpha-oléfine du copolymère (B) est habituellement d'au plus 1,8 mole %, de préférence d'au plus 1,7 mole %. Particulièrement préférée est une teneur en alpha-oléfine qui ne dépasse pas 1,5 mole %.

La teneur en alpha-oléfine de la composition est de préférence d'au moins 0,2 mole %. La teneur en alpha-oléfine de la composition ne dépasse de préférence pas 0,7 mole %.

Le polymère d'éthylène (A) peut contenir éventuellement des unités monomériques dérivées d'une autre oléfine. Le polymère d'éthylène (A) comprend de préférence au moins 99,5, plus particulièrement au moins 99,8, mole % d'unités monomériques dérivées de l'éthylène. Tout particulièrement préféré est un homopolymère d'éthylène.

Aux fins de la présente invention, on entend désigner par indice de fluidité MI₂, respectivement MI₅, les indices de fluidité mesurés selon la norme ASTM D 1238 (1986), à une température de 190 °C, sous une charge de 2,16 kg, respectivement 5 kg. Par ailleurs, on entend désigner par indice de fluidité HLMI, l'indice de fluidité mesuré selon la norme ASTM D 1238 (1986), à une température de 190 °C, sous une charge de 21,6 kg.

Le polymère(A) selon l'invention présente de préférence un MI₂ d'au moins 200, tout particulièrement d'au moins 250 g/10 min. Le MI₂ du polymère(A) ne dépasse généralement pas 1000 g/10 min, de préférence pas 700 g/10 min. Le polymère(A) présente avantageusement un HLMI d'au moins 1000 g/10 min.

Le polymère(A) présente avantageusement une viscosité inhérente ηA (mesurée dans le tétrahydronaphtalène à 160°C, à une concentration de 1 g/l, à l'aide d'un viscosimètre de type Ostwald (K2/K1 environ 620)) d'au moins 0,45 dl/g, de préférence d'au moins 0,50 dl/g. Sa viscosité inhérente ne dépasse généralement pas 0,75 dl/g, de préférence, elle ne dépasse pas 0,65 dl/g.

L'indice de fluidité MI₅ du copolymère (B) selon l'invention est de préférence d'au moins 0,005 g/10 min. Il ne dépasse de préférence pas 0,1 g/10 min. Le copolymère (B) présente avantageusement un HLMI d'au moins 0,05 g/10 min et qui, par ailleurs, ne dépasse pas 2 g/10 min.

Le copolymère (B) présente en général une viscosité inhérente η_{B} d'au moins 2,7 dl/g, de préférence d'au moins 3,9 dl/g. Sa viscosité inhérente η_{B} ne dépasse en général pas 10,9 dl/g, de préférence pas 7,6 dl/g.

Dans les compositions selon l'invention, le rapport entre la viscosité inhérente du copolymère (B) (η_{B}) et celle du polymère(A) (η_{A}) est généralement d'au moins 4, de préférence d'au moins 6. Le rapport η_{B}/η_{A} ne dépasse généralement pas 15, de préférence pas 12.

La composition selon l'invention présente généralement un indice de fluidité MI₅ d'au moins 0,07 g/10 min, de préférence d'au moins 0,1 g/10 min. Le MI₅ de la composition ne dépasse habituellement pas 1,5 g/10 min, de préférence pas 1 g/10 min. La composition selon l'invention présente avantageusement un HLMI d'au moins 1 g/10 min et qui, par ailleurs, ne dépasse pas 100 g/10 min.

La composition selon l'invention présente habituellement un rapport HLMI/MI₅ supérieur à 20, de préférence supérieur à 25. Le rapport HLMI/MI₅ ne dépasse habituellement pas 150. De manière préférée, le rapport HLMI/MI₅ ne dépasse pas 70. Le rapport HLMI/MI₅ de la composition illustre la distribution de poids moléculaire large ou bimodale de la composition.

Le polymère(A) et le copolymère (B) mis en oeuvre dans les compositions selon l'invention présentent chacun une distribution de masse moléculaire caractérisée par le rapport M_{w}/Mₙ supérieur à 4. Le rapport M_{w}/Mₙ désigne le rapport entre la masse moléculaire moyenne en poids M_{w} et la masse moléculaire moyenne en nombre Mₙ du polymère telles que mesurées par chromatographie d'exclusion stérique (SEC) selon les normes en développement ISO/DIS 16014-1 et ISO/DIS 16014-2. La SEC est réalisée dans le 1,2,4-trichlorobenzène à 135 °C et à 1 ml/min sur un chromatographe Waters 150 C équipé d'un détecteur par réfractométrie. Les injections se font sur un jeu de quatre colonnes WATERS®HT-6E dans les conditions suivantes: injection de 400µl d'une solution à 0,5g/l en polymère et en IRGANOX® 1010, courbe de calibration linéaire basée sur les coefficients de Mark-Houwink pour les polystyrènes de K = 1,21E-04 et a = 0,707 et pour les polyéthylènes de K = 3,92E-04 et a = 0,725.

Le polymère(A) présente de préférence une distribution de masse moléculaire M_{w}/Mₙ qui ne dépasse pas 12, plus particulièrement pas 10. Le copolymère (B) présente de préférence une distribution de masse moléculaire M_{w}/Mₙ d'au moins 6 et qui ne dépasse pas 15, plus particulièrement pas 12. Il a été constaté que la mise en oeuvre de polymères (A) et (B) ayant une distribution de masse moléculaire M_{w}/Mₙ supérieure à 4 permet d'obtenir des compositions présentant une meilleure homogénéité lorsque la composition est mise en oeuvre ultérieurement en comparaison avec des compositions ayant la même composition et les mêmes caractéristiques, mais comprenant des polymères d'éthylène ayant une distribution de masse moléculaire M_{w}/Mₙ inférieure à 4.

Les compositions selon l'invention présentent de préférence une masse volumique standard MVS mesurée selon la norme ASTM D 792 (sur un échantillon préparé selon la norme ASTM D 1928 Procédure C), d'au moins 952 kg/m³, plus particulièrement d'au moins 954 kg/m³. De préférence, la MVS ne dépasse pas 960 kg/m³. Particulièrement préférées sont les compositions dont la MVS est inférieure à 958 kg/m³. La MVS du polymère(A) présent dans les compositions selon l'invention est de préférence d'au moins 972 kg/m³. La MVS du copolymère (B) est de préférence d'au moins 910 kg/m³. La MVS du copolymère (B) ne dépasse de préférence pas 928 kg/m³, plus particulièrement pas 926 kg/m³.

La quantité de polymère(A) dans la composition de polymères d'éthylène selon l'invention est de préférence d'au moins 55 %, plus particulièrement d'au moins 57 % en poids par rapport au poids total de la composition. La quantité de polymère(A) ne dépasse de préférence pas 62 % en poids.

La quantité de copolymère (B) est de préférence d'au moins 38 %. La quantité de copolymère (B) ne dépasse de préférence pas 45 % en poids. De bons résultats ont été obtenus avec une quantité de copolymère (B) ne dépassant pas 43 % en poids par rapport au poids total de la composition.

La composition selon l'invention comprend généralement au moins 95 %, de préférence au moins 99 % en poids de l'ensemble du polymère(A) et du copolymère (B). Tout particulièrement préférée est une composition constituée du polymère(A) et du copolymère (B).

La composition est de préférence constituée d'un mélange intime et homogène du polymère(A) et du copolymère (B), le copolymère (B) étant préparé en présence du polymère(A) ou vice versa. De cette façon la composition comprend des particules comprenant à la fois le polymère (A) et le copolymère (B).

Les compositions selon l'invention sont de préférence obtenues au moyen d'un procédé de fabrication, dans au moins deux réacteurs de polymérisation connectés en série, selon lequel :
- dans un premier réacteur, on polymérise de l'éthylène en suspension dans un milieu comprenant un diluant, de l'hydrogène, un catalyseur à base d'un métal de transition et un cocatalyseur, de façon à former de 53 à 63 % en poids par rapport au poids total de la composition du polymère de l'éthylène (A),
- on soutire dudit réacteur ledit milieu comprenant en outre le polymère (A) et on le soumet à une détente de façon à dégazer au moins une partie de l'hydrogène, puis,
- on introduit dans un réacteur ultérieur ledit milieu au moins partiellement dégazé comprenant le polymère(A) ainsi que de l'éthylène et au moins une autre alpha-oléfine contenant de 4 à 10 atomes de carbone et on y effectue la polymérisation en suspension pour former de 37 à 47 % en poids par rapport au poids total de la composition du copolymère de l'éthylène (B).

Par polymérisation en suspension, on entend désigner la polymérisation dans un diluant qui est à l'état de liquide dans les conditions de polymérisation (température, pression) utilisées, ces conditions de polymérisation ou le diluant étant tels qu'au moins 50 % en poids (de préférence au moins 70 %) du polymère formé soit insoluble dans ledit diluant.

Le diluant utilisé dans ce procédé de polymérisation est habituellement un diluant hydrocarboné, inerte vis-à-vis du catalyseur, du cocatalyseur et du polymère formé, tel que par exemple un alcane linéaire ou ramifié ou un cycloalcane, ayant de 3 à 8 atomes de carbone, tel que l'hexane ou l'isobutane.

La quantité d'hydrogène introduite dans le premier réacteur est en général réglée de façon à obtenir, dans le diluant, un rapport molaire entre l'hydrogène et l'éthylène de 0,05 à 1. Dans le premier réacteur, ce rapport molaire est de préférence d'au moins 0,1. Particulièrement préféré est un rapport molaire hydrogène/éthylène qui ne dépasse pas 0,6.

Le milieu soutiré du premier réacteur comprenant en outre le polymère(A) est soumis à une détente de façon à éliminer (dégazer) au moins une partie de l'hydrogène. La détente est avantageusement effectuée à une température inférieure ou égale à la température de polymérisation dans le premier réacteur. La température à laquelle est effectuée la détente est habituellement supérieure à 20 °C, elle est de préférence d'au moins 40 °C. La pression à laquelle est effectuée la détente est inférieure à la pression dans le premier réacteur. La pression de détente est de préférence inférieure à 1,5 MPa. La pression de détente est habituellement d'au moins 0,1 MPa. La quantité d'hydrogène encore présente dans le milieu au moins partiellement dégazé est généralement inférieure à 1 % en poids de la quantité d'hydrogène initialement présente dans le milieu soutiré du premier réacteur de polymérisation, cette quantité est de préférence inférieure à 0,5 %. La quantité d'hydrogène présente dans le milieu partiellement dégazé introduit dans le réacteur de polymérisation ultérieur est dès lors faible, voire nulle. Le réacteur ultérieur est de préférence également alimenté en hydrogène. La quantité d'hydrogène introduite dans le réacteur ultérieur est en général réglée de façon à obtenir, dans le diluant, un rapport molaire entre l'hydrogène et l'éthylène de 0,001 à 0,1. Dans ce réacteur ultérieur, ce rapport molaire est de préférence d'au moins 0,004. Il ne dépasse de préférence pas 0,05. Dans le procédé selon l'invention, le rapport entre la concentration d'hydrogène dans le diluant dans le premier réacteur et celle dans le réacteur de polymérisation ultérieur est habituellement d'au moins 20, de préférence d'au moins 30. Particulièrement préféré est un rapport de concentrations d'au moins 40. Ce rapport n'excède habituellement pas 300, de préférence pas 200.

La quantité d'alpha-oléfine introduite dans le réacteur de polymérisation ultérieur est telle que, dans ce réacteur, le rapport molaire alpha-oléfine/éthylène dans le diluant est d'au moins 0,05, de préférence d'au moins 0,1. La quantité d'alpha-oléfine introduite dans le réacteur ultérieur est telle que le rapport molaire alpha-oléfine/éthylène ne dépasse pas 3, de préférence pas 2,8.

Le catalyseur utilisé dans ce procédé comprend au moins un métal de transition. Par métal de transition, on entend désigner un métal des groupes 4, 5 ou 6 du Tableau Périodiques des éléments (CRC Handbook of Chemistry and Physics, 75th edition, 1994-95). Le métal de transition est de préférence le titane et/ou le zirconium. Particulièrement préféré est le titane. On met de préférence en oeuvre un catalyseur comprenant, en outre le métal de transition, du magnésium. De bons résultats ont été obtenus avec des catalyseurs comprenant :
- de 10 à 30 %, de préférence de 15 à 20 %, en poids de métal de transition,
- de 0,5 à 20 %, de préférence de 1 à 10 %, en poids de magnésium,
- de 20 à 60 %, de préférence de 30 à 50 %, en poids d'halogène, tel que du chlore,
- de 0,1 à 10 %, de préférence de 0,5 à 5 %, en poids d'aluminium; le solde étant généralement constitué d'éléments provenant des produits utilisés pour leur fabrication tels que du carbone, de l'hydrogène et de l'oxygène. Ces catalyseurs sont de préférence obtenus par coprécipitation d'au moins un composé de métal de transition et d'un composé de magnésium au moyen d'un composé organoaluminique halogéné. De tels catalyseurs sont connus, ils ont notamment été décrits dans les brevets US 3901863, US 4292200 et US 4617360 (SOLVAY). Le catalyseur est de préférence introduit uniquement dans le premier réacteur de polymérisation, c'est-à-dire qu'il n'y a pas d'introduction de catalyseur frais dans le réacteur ultérieur de polymérisation.

Le cocatalyseur mis en oeuvre dans le procédé est de préférence un composé organoaluminique. Les composés organoaluminiques non halogénés de formule AlR₃ dans lesquels R représente un groupement alkyle ayant de 1 à 8 atomes de carbone, sont préférés. Particulièrement préférés sont le triéthylaluminium et le triisobutylaluminium. Le cocatalyseur est introduit dans le premier réacteur de polymérisation. On peut également introduire du cocatalyseur frais dans le réacteur ultérieur. La quantité de cocatalyseur introduite dans le premier réacteur est en général d'au moins 0,1x10⁻³ mole par litre de diluant. Elle ne dépasse habituellement pas 5x10⁻³ mole par litre de diluant. Le cas échéant, la quantité de cocatalyseur frais introduite dans le réacteur ultérieur ne dépasse habituellement pas 5x10⁻³ mole par litre de diluant.

La température de polymérisation est généralement de 20 à 130 °C. Elle est de préférence d'au moins 60 °C. De manière préférée, elle ne dépasse pas 115 °C. La pression totale à laquelle est effectué le procédé est en général de 0,1 MPa à 10 MPa. Dans le premier réacteur de polymérisation, la pression totale est de préférence d'au moins 2,5 MPa. De manière préférée, elle ne dépasse pas 5 MPa. Dans le réacteur ultérieur de polymérisation, la pression totale est de préférence d'au moins 1,3 MPa. De manière préférée, elle ne dépasse pas 4,3 MPa.

La durée de polymérisation dans le premier réacteur et dans le réacteur ultérieur est en général d'au moins 20 minutes, de préférence d'au moins 30 minutes. La durée de polymérisation ne dépasse habituellement pas 5 heures, de préférence pas 3 heures.

Dans ce procédé, on collecte à la sortie du réacteur de polymérisation ultérieur, une suspension comprenant une composition comprenant de 53 à 63 % en poids du polymère(A) et de 37 à 47 % en poids du copolymère (B). La composition de polymères d'éthylène peut être séparée de la suspension par tout moyen connu. Habituellement, la suspension est soumise à une détente de pression (détente finale) de façon à éliminer le diluant, l'éthylène, l'alpha-oléfine et, éventuellement, l'hydrogène de la composition.

Ce procédé permet d'obtenir, avec un bon rendement et avec une faible teneur en oligomères, une composition de polymères d'éthylène présentant un très bon compromis entre les propriétés mécaniques et les propriétés de mise en oeuvre.

Les compositions selon l'invention conviennent bien pour la fabrication de tuyaux, notamment de tuyaux pour le transport de fluides sous pression, tels que l'eau et le gaz. L'invention concerne dès lors également l'utilisation d'une composition selon l'invention pour la fabrication de tuyaux. Il va de soi, que lorsqu'elles sont utilisées pour le façonnage en fondu d'articles, et plus particulièrement pour la fabrication de tuyaux, les compositions selon l'invention peuvent être mélangées avec les additifs de mise en oeuvre usuels des polyoléfines, tels que des stabilisants (des agents antioxydants, des anti-acides et/ou anti-UV), des agents antistatiques et des agents de mise en oeuvre ("processing aid") ainsi que des pigments. L'invention concerne dès lors également un mélange comprenant une composition selon l'invention et au moins un des additifs décrits ci-dessus. Particulièrement préférés sont les mélanges comprenant au moins 95 %, de préférence au moins 97 %, en poids d'une composition selon l'invention et au moins un des additifs décrits ci-dessus. La fabrication de tuyaux par extrusion d'une composition selon l'invention s'effectue avantageusement sur une chaîne d'extrusion comprenant une extrudeuse, un calibreur et un dispositif de tirage. L'extrusion est généralement réalisée sur une extrudeuse du type monovis et à une température de 150 à 230 °C. Le calibrage des tuyaux peut être effectué par la création d'une dépression à l'extérieur du tuyau et/ou par la création d'une surpression à l'intérieur du tuyau.

Les tuyaux fabriqués au moyen des compositions selon l'invention se caractérisent par :
- une bonne résistance à la propagation lente de fissures (ESCR-NPT), traduite par un temps à la rupture, tel que mesuré selon la méthode décrite dans la norme ISO F/DIS 13479 (1996) [à 80 °C, sur un tube entaillé ayant un diamètre de 110 mm et une épaisseur de 10 mm et sous une contrainte de 5,0 MPa] généralement supérieur à 1500 heures ;
- une bonne résistance à la propagation lente de fissures (FNCT), traduite par un temps de rupture, tel que mesuré par la méthode décrite dans la norme en préparation ISO/DIS 16770.2 (2001) [à 80 °C sous une contrainte de 5MPa (dans une solution Arkopal N110 2%)], généralement supérieure à 100 heures ;
- une bonne résistance à la propagation rapide de fissures (RCP), traduite par un arrêt de la propagation de fissure à une pression interne généralement au moins égale à 10 bar, tel que mesuré, à 0 °C, sur un tube d'un diamètre de 110 mm et d'une épaisseur de 10 mm selon la méthode S4 décrite dans la norme ISO F/DIS 13477(1996);
- une bonne résistance au fluage (τ), traduite par un temps à la rupture généralement supérieur à 500 heures (mesuré, à 20 °C, sur un tube ayant un diamètre de 50 mm et une épaisseur de 2,9 mm sous une contrainte circonférentielle de 13 MPa selon la norme ISO 1167).

Les tuyaux obtenus au moyen des compositions selon l'invention ont une résistance à la pression à long terme qui permet de leur attribuer un classement MRS supérieur au classement MRS 10 selon la norme ISO/TR 9080. Le plus souvent, les tuyaux obtenus au moyen d'une composition selon l'invention ont une résistance à la pression qui permet de leur attribuer un classement MRS de 11,2, voire de 12,5 selon la norme ISO/TR 9080.
Les tuyaux fabriqués au moyen des compositions selon l'invention se caractérisent en particulier par un meilleur compromis entre la résistance à la propagation de fissures (propagation lente et propagation rapide de fissures) et la résistance au fluage par rapport aux compositions connues de l'art antérieur. L'invention concerne dès lors également les tuyaux, plus particulièrement les tuyaux pour le transport de fluides sous pression, obtenus par extrusion d'une composition selon l'invention.

Les exemples qui suivent sont destinés à illustrer l'invention.

La signification des symboles utilisés dans ces exemples et les unités exprimant les grandeurs mentionnées et les méthodes de mesures de ces grandeurs sont explicitées ci-dessous.
Q = teneur en comonomère du copolymère (B), exprimée en mole %, mesurée comme décrit ci-dessus.
QT = teneur en comonomère de la composition, exprimée en mole %. Cette teneur est mesurée comme expliquée ci-dessus pour la teneur en comonomère du copolymère (B).

Les autres symboles ont été explicités dans la description.

Les valeurs marquées * ont été calculées à partir des valeurs mesurées pour le polymère fabriqué dans le réacteur 1 et pour la composition issue du réacteur 2.

### Exemple 1

### a) Préparation du catalyseur

On a fait réagir pendant 4 heures à 150 °C du diéthylate de magnésium avec du tétrabutylate de titane en des quantités telles que le rapport molaire de titane au magnésium soit égal à 2. Ensuite, on a chloré et précipité le produit de réaction ainsi obtenu en mettant celui-ci en contact avec une solution de dichlorure d'éthylaluminium pendant 90 minutes à 45 °C. Le catalyseur ainsi obtenu, recueilli de la suspension, comprenait (% en poids) :
Ti: 17; Cl : 41; Al : 2; Mg : 5.

### b) Préparation du polymère(A)

On a introduit dans un réacteur de polymérisation de l'hexane, de l'éthylène, de l'hydrogène, du triéthylaluminium et le catalyseur décrit au point a) et on a polymérisé l'éthylène à 90 °C pendant 1 h 33 min. Le rapport molaire hydrogène/éthylène dans le réacteur était de 0,4.
Les caractéristiques du polymère obtenu sont présentées dans le tableau 1.

### c) Préparation du copolymère (B)

On a introduit dans un réacteur de polymérisation de l'isobutane, de l'éthylène, de l'hydrogène, du 1-butène, du triéthylaluminium et le catalyseur décrit au point a) et on a polymérisé l'éthylène à 75 °C pendant 55 min. Le rapport molaire hydrogène/éthylène et 1-butène/éthylène étaient, respectivement, de 0,000 et de 1,009. Les caractéristiques du polymère obtenu sont présentées dans le tableau 1.

### d) Préparation de la composition comprenant le polymère(A) et le copolymère (B)

On a mélangé dans une extrudeuse 600 g de l'polymère(A) tel que décrit dans le point b) avec 400 g du copolymère (B) tel que décrit dans le point c). Le mélange ainsi obtenu a été granulé et ses caractéristiques ont été mesurées. Elles sont reprises dans le tableau 1.

### Exemples 2 à 4

Des compositions comprenant des quantités différentes ou des copolymères différents du copolymère (B) décrit à l'exemple 1c) ont été fabriquées.

Les caractéristiques et les propriétés de ces compositions sont présentées dans le tableau 1.

### Exemples comparatifs 5R à 9R

Des compositions non conformes à l'invention comprenant des quantités différentes ou des copolymères différents du copolymère (B) décrit à l'exemple 1c) ont été fabriquées. Les caractéristiques et les propriétés de ces compositions sont présentées dans le tableau 1.

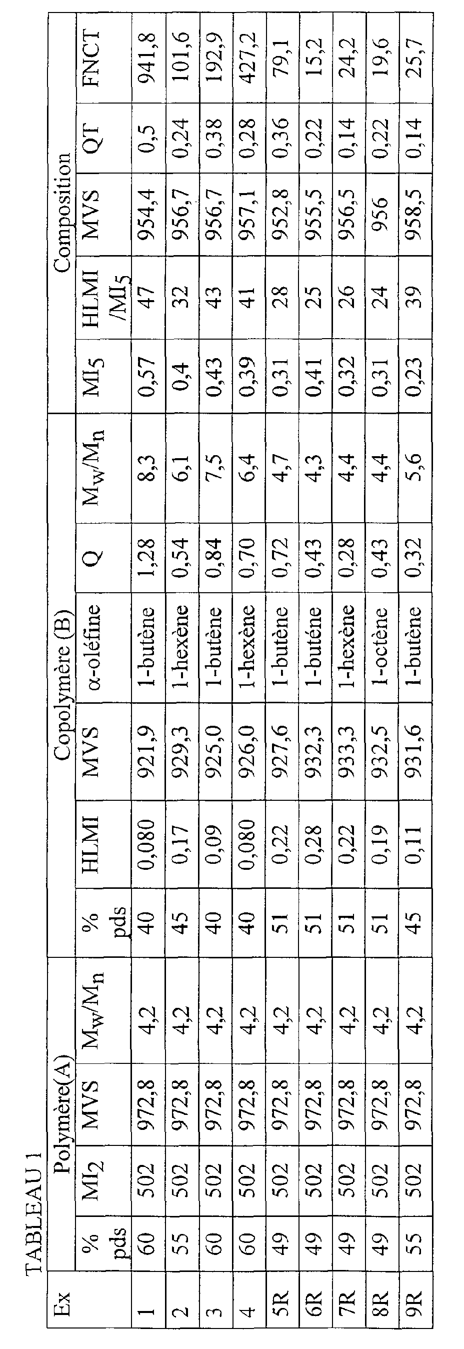

### Exemples 10 et 11

On a fabriqué des compositions de polymères d'éthylène en suspension dans l'isobutane dans deux réacteurs boucles connectés en série, séparés par un dispositif permettant d'effectuer en continu la détente de pression.

Dans le premier réacteur boucle, on a introduit en continu le catalyseur tel que décrit au point a) de l'exemple 1, et dans ce milieu, on a effectué la polymérisation de l'éthylène pour former le polymère(A). On a soutiré, en continu, dudit réacteur ledit milieu comprenant en outre le polymère(A), et on l'a soumis à une détente (48 °C, 0,6 MPa) de façon à éliminer au moins une partie de l'hydrogène. Le milieu au moins partiellement dégazé en hydrogène résultant a alors été introduit en continu dans un deuxième réacteur de polymérisation, en même temps que de l'éthylène, de l'hexène, de l'isobutane et de l'hydrogène et on y a effectué la polymérisation de l'éthylène et de l'hexène pour former le copolymère (B). On a soutiré en continu du deuxième réacteur la suspension comprenant la composition de polymères d'éthylène et on a soumis cette suspension à une détente finale de façon à évaporer l'isobutane et les réactifs présents (éthylène, hexène et hydrogène) et de récupérer la composition sous la forme d'une poudre qui a été soumise à un séchage pour achever le dégazage de l'isobutane.
Les autres conditions de polymérisation sont spécifiées dans le tableau 2.

Les propriétés des compositions finales sont présentées dans le tableau 3.

973 parts de la composition obtenue ont été mélangées avec 22,5 parts de noir de carbone, 3,5 parts d'un agent antioxydant et 1 part d'un agent anti-acide. Ce mélange a été granulé par extrusion dans une extrudeuse à une température d'environ 260 °C.

Puis des tuyaux ont été fabriqués par extrusion de ces granules sur une extrudeuse de type monovis à 200 °C. Les propriétés mesurées sur ces tuyaux sont reprises dans le tableau 3.

### Exemples comparatifs 12R et 13R

L'exemple 10 a été répété mais en adaptant les conditions de polymérisation (voir tableau 2) afin d'obtenir les compositions telles que décrites dans le tableau 3.

Il apparaît que les compositions selon l'invention (exemples 10 et 11) présentent un meilleur compromis entre la résistance à la propagation de fissures (résistance à la propagation lente de fissures et résistance à la propagation rapide de fissures) et la résistance au fluage par rapport à des compositions non conformes à l'invention (exemples 12R et 13R).

**TABLEAU 2**

| EXEMPLE | 10 | 11 | 12R | 13R |
|---|---|---|---|---|
| RÉACTEUR 1 | | | | |
| C2 (g/kg diluent) | 12 | 16,5 | 7,4 | 12,5 |
| H2/C2 (%mol) | 55,7 | 43,2 | 57,7 | 38,6 |
| T (°C) | 90 | 90 | 90 | 90 |
| tps séjour (h) | 1,4 | 2,5 | 1,4 | 2,5 |

| RÉACTEUR 2 | | | | |
|---|---|---|---|---|
| C2 (g/kg diluent) | 28,9 | 39,6 | 25,7 | 30,6 |
| 1-hexène/C2 %mol | 116 | 99,3 | 73 | 175,2 |
| H2/C2 (%mol) | 0,31 | 0,20 | 0,31 | 0,14 |
| T (°C) | 77 | 80 | 77 | 80 |
| tps séjour (h) | 1,12 | 0,90 | 1,13 | 0,90 |

**TABLEAU 3**

| EXEMPLE | 10 | 11 | 12R | 13R |
|---|---|---|---|---|
| Polymère fabriqué au réacteur 1 | homo | homo | homo | homo |
| poids (%) | 58,4 | 54,7 | 51,7 | 52,4 |
| MI₂ (g/10min) | 571 | 486 | 416 | 360 |
| MVS (kg/m³) | 973,3 | 973,5 | 973,4 | 973,5 |

| Polymère fabriqué au réacteur 2 | copo C2-C6 | copo C2-C6 | copo C2-C6 | copo C2-C6 |
|---|---|---|---|---|
| poids (%) | 41,6 | 45,3 | 48,3 | 47,6 |
| MI₅ *(g/10min) | 0,018 | 0,020 | 0,021 | 0,019 |
| MVS *(kg/m³) | 924,3 | 926,5 | 926,0 | 923,8 |
| Q *(% molaire) | 0,72 | 0,70 | 0,66 | 0,80 |

| Composition issue du réact. 2 | | | | |
|---|---|---|---|---|
| QT (% molaire) | 0,30 | 0,32 | 0,32 | 0,38 |
| MI₅ (g/10min) | 0,54 | 0,43 | 0,35 | 0,33 |
| MVS (kg/m³) | 955,3 | 954,6 | 952,9 | 952,2 |
| ESCR-NPT (h) [80°C, contrainte 5,0 MPa] | > 300 | > 430 | | > 430 |
| τ (h) 20°C 13, 9 MPa | 40 | 36 | 25 | 22 |
| τ (h) 20°C 13,3 MPa | 112 | 97 | 57 | 50 |

## Revendications

1. Composition de polymères d'éthylène ayant une masse volumique standard MVS d'au moins 950 kg/m³, un indice de fluidité MI₅ de 0,05 à 2 g/10 min et une teneur en alpha-oléfine contenant de 4 à 10 atomes de carbone de 0,15 à 1 mole % et comprenant :
- de 53 à 63 % en poids par rapport au poids total de la composition d'une fraction polymère de l'éthylène (A) ayant un indice de fluidité MI₂ d'au moins 100 g/10 min, une masse volumique standard d'au moins 969 kg/m³ et une distribution de masse moléculaire M_{w}/Mₙ supérieure à 4, et
- de 37 à 47 % en poids par rapport au poids total de la composition d'une fraction copolymère de l'éthylène et d'au moins une alpha-oléfine contenant de 4 à 10 atomes de carbone (B) ayant une teneur en alpha-oléfine de 0,32 à 2,7 mole %, un indice de fluidité MI₅ de 0,001 à 0,5 g/10 min, une masse volumique standard d'au plus 930 kg/m³ et une distribution de masse moléculaire M_{w}/Mₙ supérieure à 4.

2. Composition selon la revendication 1, **caractérisée en ce qu'**elle présente un MVS d'au moins 952 kg/m³ et qui ne dépasse pas 960 kg/m³.

3. Composition selon la revendication 1, **caractérisée en ce qu'**elle présente un MI₅ d'au moins 0,1 et ne dépassant pas 1 g/10 min.

4. Composition selon l'une quelconque des revendication 1 à 3, **caractérisée en ce qu'**elle comprend au moins 55 % en poids par rapport au poids total de la composition de la fraction polymère de l'éthylène (A).

5. Composition selon l'une quelconque des revendications 1 à 4, **caractérisée en ce que** la composition comprend au moins 0,2 mole % et au plus 0,7 mole % d'unités monomériques dérivées de l'alpha-oléfine contenant de 4 à 10 atomes de carbone.

6. Composition selon l'une quelconque des revendications 1 à 5, **caractérisée en ce que** l'alpha-oléfine est le 1-butène et/ou le 1-hexène.

7. Composition selon l'une quelconque des revendications 1 à 6, obtenue au moyen d'un procédé de fabrication, dans au moins deux réacteurs de polymérisation connectés en série, selon lequel :
- dans un premier réacteur, on polymérise de l'éthylène en suspension dans un milieu comprenant un diluant, de l'hydrogène, un catalyseur à base d'un métal de transition et un cocatalyseur, de façon à former de 53 à 63 % en poids par rapport au poids total de la composition du polymère de l'éthylène (A),
- on soutire dudit réacteur ledit milieu comprenant en outre le polymère (A) et on le soumet à une détente de façon à dégazer au moins une partie de l'hydrogène, puis,
- on introduit dans un réacteur ultérieur ledit milieu au moins partiellement dégazé comprenant le polymère (A) ainsi que de l'éthylène et au moins une autre α-oléfine contenant de 4 à 10 atomes de carbone et on y effectue la polymérisation en suspension pour former de 37 à 47 % en poids par rapport au poids total de la composition du copolymère de l'éthylène (B).

8. Composition selon la revendication 7, **caractérisée en ce que** le catalyseur mis en oeuvre comprend de 10 à 30 % en poids de métal de transition, de 0,5 à 20 % en poids de magnésium, de 20 à 60 % en poids d'un halogène et de 0,1 à 10 % en poids d'aluminium.

9. Utilisation d'une composition selon l'une quelconque des revendications 1 à 8 pour la fabrication de tuyaux.

10. Tuyaux obtenus par extrusion d'une composition selon l'une quelconque des revendications 1 à 8.
